# EUROPEAN PATENT APPLICATION

(11) **EP 4 159 355 A1**
(43) Date of publication of application: **05.04.2023**
(21) Application number: 21776168.3
(22) Date of filing: 25.03.2021
(51) Int. Cl.: B23K 20/12, B23K 26/073, B23K 26/21

(54) **WELDING METHOD AND WELDING APPARATUS**

(30) Priority: 27.03.2020 JP 2020057391
(71) Applicant: Furukawa Electric Co., Ltd., Tokyo 100-8322 (JP)
(72) Inventor: YASUOKA, Tomomichi, Tokyo 100-8322 (JP); KAYAHARA, Takashi, Tokyo 100-8322 (JP); SHIGEMATSU, Takashi, Tokyo 100-8322 (JP); SAKAI, Toshiaki, Tokyo 100-8322 (JP)
(74) Representative: SSM Sandmair
(86) International application number: PCT/JP2021/012667
(87) International publication number: WO 2021/193855

(57) **Abstract**

In a welding method, for example, a laser beam is emitted to a workpiece including metal, melts a portion of the workpiece to which the laser beam is emitted, and performs welding. The laser beam includes a main power region and at least one auxiliary power region, power in the main power region is equal to or higher than power in each of the at least one auxiliary power region, and a power ratio of the power in the main power region and a total of the power in the at least one auxiliary power region is within a range of 144:1 to 1:1.

## Description

### Field

The present invention relates to a welding method and a welding apparatus.

### Background

Laser welding is known as one of methods to weld a workpiece made of metal material. The laser welding is a welding method in which a laser beam is emitted to a portion to be welded of a workpiece to melt the portion with the energy of the laser beam. A pool of the molten metal material called a molten pool is formed in the portion to which the laser beam is emitted, then the molten pool is solidified, achieving welding.

In addition, when laser beam is emitted to the workpiece, a profile of the laser beam is formed depending on a purpose, in some cases. For example, a technology is known to form a profile of laser beam when using the laser beam to cut a workpiece (e.g., see Patent Literature 1).

### Citation List

### Patent Literature

Patent Literature 1: JP 2010-508149 W

### Summary

### Technical Problem

Incidentally, it is known that a splash called spatter is generated from the molten pool, during welding. The spatter is a splash of the molten metal, and reduction of occurrence of the spatter is important to prevent processing defect. The spatter is the splash of the molten metal, and thus, generation of the spatter also represents a reduction of the metal material at a welded portion. In other words, frequent occurrence of the spatter may cause insufficient metal material at the welded portion, leading to insufficient strength or the like. In addition, the generated spatter that adheres to the periphery of the welded portion may peel off later and adhere to an electric circuit or the like, causing an abnormality in the electric circuit. Thus, in some cases, it is difficult to weld a component for the electrical circuit.

Furthermore, in this type of welding, it is of course important to obtain a required weld strength.

Therefore, an object of the present invention is to obtain, for example, a novel welding method and a novel welding apparatus that are configured to obtain a required weld strength while suppressing a spatter.

### Solution to Problem

A welding method according to the present invention includes, for example: emitting a laser beam to a workpiece including a metal; and welding a portion of the workpiece to which the laser beam is emitted by melting. The laser beam includes a main power region and at least one auxiliary power region, power in the main power region is equal to or higher than power in each of the at least one auxiliary power region, and a power ratio of the power in the main power region and a total of the power in the at least one auxiliary power region is within a range of 144:1 to 1:1.

In the welding method, the laser beam and the workpiece move relative to each other.

In the welding method, for example, an aspect ratio of a depth of a weld to a width orthogonal to a sweep direction of the weld formed in the workpiece by relative movement between the laser beam and the workpiece is 0.8 or more.

In the welding method, for example, a relative moving speed between the laser beam and the workpiece is 2 m/min or more and 30 m/min or less.

In the welding method, for example, the relative moving speed is 2 m/min or more and 20 m/min or less.

In the welding method, for example, the relative moving speed is 5 m/min or more and 10 m/min or less.

A welding apparatus according to the present invention includes, for example: a laser oscillator; and an optical head configured to receive light oscillated from the laser oscillator to generate a laser beam, emit the generated laser beam to a workpiece to melt a portion of the workpiece to which the laser beam is emitted, and perform welding, wherein the laser beam includes a main power region and at least one auxiliary power region, power in the main power region is equal to or higher than power in each of the at least one auxiliary power region, and a power ratio of the power in the main power region and a total of the power in the at least one auxiliary power region is within a range of 144:1 to 1:1.

In the welding apparatus, the laser beam and the workpiece move relative to each other.

### Advantageous Effects of Invention

According to the present invention, it is possible to suppress generation of the spatter and to obtain the required weld strength.

### Brief Description of Drawings

FIG. 1 is an exemplary schematic configuration diagram of a laser welding apparatus according to a first embodiment.
FIG. 2 is an explanatory diagram illustrating the concept of a principle of a diffractive optical element included in the laser welding apparatus according to the first embodiment.
FIG. 3 is a schematic diagram illustrating an example of beams (spots) of a laser beam emitted from the laser welding apparatus according to the first embodiment, on a surface of a workpiece.
FIG. 4 is a schematic diagram illustrating another example of beams (spots) of a laser beam emitted from the laser welding apparatus according to the first embodiment, on the surface of the workpiece.
FIG. 5 is an exemplary schematic cross-sectional view illustrating a weld formed in the workpiece by the laser beam emitted from the laser welding apparatus according to the first embodiment.
FIG. 6 is an exemplary schematic configuration diagram of a laser welding apparatus according to a second embodiment.
FIG. 7 is an exemplary schematic configuration diagram of a laser welding apparatus according to a third embodiment.
FIG. 8 is a schematic diagram illustrating a schematic configuration of a laser welding apparatus according to a fourth embodiment.
FIG. 9 is a schematic diagram illustrating a schematic configuration of a laser welding apparatus according to a fifth embodiment.
FIG. 10 is a schematic diagram illustrating a schematic configuration of a laser welding apparatus according to a sixth embodiment.
FIG. 11 is a diagram illustrating a configuration example of an optical fiber.
FIG. 12 is a diagram illustrating a configuration example of an optical fiber.
FIG. 13 is a schematic view illustrating a modification of the beams (spots) of the laser beam emitted from the laser welding apparatus according to an embodiment, on the surface of the workpiece.

### Description of Embodiments

Exemplary embodiments of the present invention will be disclosed below. The configurations of the embodiments described below, and the functions and results (effects) provided by the configurations are examples. The present invention can also be achieved by configurations other than those disclosed in the following embodiments. In addition, according to the present invention, it is possible to obtain at least one of various effects (including derivative effects) obtained by the configurations.

The embodiments described below include similar configurations. Therefore, according to the configurations of the respective embodiments, similar functions and effects based on the similar configurations can be obtained. In addition, in the following description, the similar configurations are denoted by similar reference numerals and symbols, and redundant description may be omitted.

Furthermore, in each drawing, a direction X is indicated by an arrow X, a direction Y is indicated by an arrow Y, and a direction Z is indicated by an arrow Z. The direction X, the direction Y, and the direction Z intersect each other and are orthogonal to each other. The Z direction is a direction normal to a surface Wa (surface to be processed) of a workpiece W.

### [First Embodiment]

### [Configuration of laser welding apparatus]

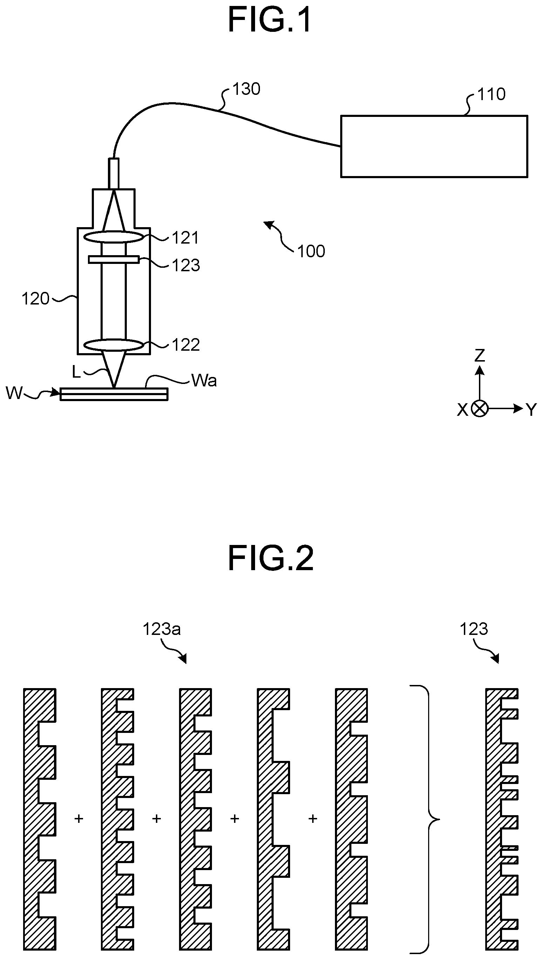

FIG. 1 is a diagram illustrating a schematic configuration of a laser welding apparatus according to a first embodiment. The laser welding apparatus 100 includes a laser device 110, an optical head 120, and an optical fiber 130 that connects the laser device 110 and the optical head 120. The laser welding apparatus 100 is an example of a welding apparatus.

A workpiece W for the laser welding apparatus 100 can be made of, for example, an iron-based metal material, an aluminum-based metal material, a copper-based metal material, or the like. In addition, the workpiece W has, for example, a plate shape, and the workpiece W has but is not limited to a thickness of, for example, 1 mm or more and 10 mm or less. In addition, the workpiece W is obtained by superimposing a plurality of members. The number of plurality of members and the thickness of each member can be variously changed.

The laser device 110 includes a laser oscillator, and is configured, for example, to output a laser beam having a power of several kilowatts. Furthermore, the laser device 110 may internally include, for example, a plurality of semiconductor laser elements to output the laser beam having a power of several kilowatts in a total of the plurality of semiconductor laser elements. Furthermore, the laser device 110 may include various laser light sources, such as a fiber laser, a YAG laser, and a disk laser, and for the laser beam, a single-mode laser beam or multi-mode laser beam may be used. Furthermore, the laser device 110 may include various laser light sources, such as a fiber laser, a YAG laser, and a disk laser.

The optical fiber 130 guides the laser beam output from the laser device 110 to the optical head 120.

The optical head 120 is an optical device for emitting the laser beam input from the laser device 110 to the workpiece W. The optical head 120 includes a collimator lens 121, a condenser lens 122, and a diffractive optical element (DOE) 123. The collimator lens 121, the condenser lens 122, and the DOE 123 can also be referred to as optical components.

The optical head 120 is configured to change a relative position with respect to the workpiece W in order to sweep a laser beam L while emitting the laser beam L onto the workpiece W. The relative movement between the optical head 120 and the workpiece W can be achieved by movement of the optical head 120, movement of the workpiece W, or movement of both of the optical head 120 and the workpiece W.

The collimator lens 121 collimates the input laser beam. The collimated laser beam becomes collimated light. Furthermore, the condenser lens 122 condenses the laser beam as the collimated light and emits the laser beam as the laser beam L (output light) to the workpiece W.

The DOE 123 is arranged between the collimator lens 121 and the condenser lens 122, and forms a shape of laser beam (hereinafter, referred to as a beam shape). As conceptually exemplified in FIG. 2, the DOE 123 has, for example, a configuration in which a plurality of diffraction gratings 123a having different periods are superimposed. The DOE 123 is configured to bend or superimpose the collimated light in a direction influenced by each diffraction grating 123a to form the beam shape. The DOE 123 may also be referred to as a beam shaper.

### [Shape of beam (spot)]

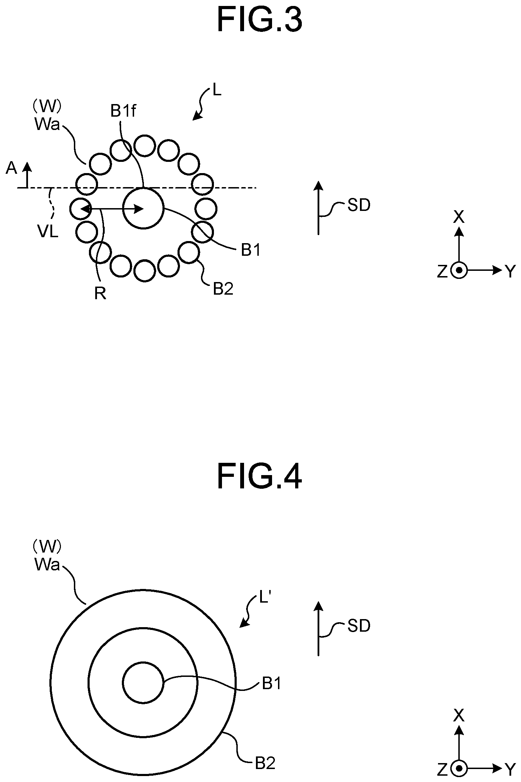

The DOE 123 splits the laser beam input from the collimator lens 121 into a plurality of beams. FIG. 3 is a diagram illustrating an example of beams (spots) of laser beam L formed on the surface Wa of the workpiece W, and FIG. 4 is a diagram illustrating an example of beams (spots) of a laser beam L' formed on the surface Wa of the workpiece W. Note that in FIGS. 3 and 4, an arrow SD indicates a sweep direction of the beams on the surface Wa of the workpiece W. Changing the DOE 123 enables the optical head 120 to output both the laser beam L and the laser beam L'.

The DOE 123 splits the laser beam so as to form one spot of main beam B1 and at least one spot of auxiliary beam B2, on the surface Wa. In the example of FIG. 3, shaping the beams by the DOE 123 forms one spot of the main beam B1 and a plurality of spots of the auxiliary beams B2 arranged in an annular shape around the spot of the main beam B1, on the surface Wa. In addition, in the example of FIG. 4, shaping the beams by the DOE 123 forms one spot of the main beam B1 and one spot of the auxiliary beam B2 having an annular shape and surrounding the spot of the main beam B1, on the surface Wa. A region to which the main beam B1 is emitted is an example of a main power region, and a region to which the auxiliary beam B2 is emitted is an example of an auxiliary power region.

In addition, the DOE 123 shapes the beams so that at least part of any of the spots of the auxiliary beams B2 is positioned in front of the spot of the main beam B1 in the sweep direction SD, on the surface Wa. Specifically, any of the auxiliary beams B2 is preferably positioned at least partially in an area A ahead of an imaginary straight line VL passing through a front end B1f of the main beam B1 and being orthogonal to the sweep direction SD in the sweep direction SD.

The main beam B1 and the auxiliary beams B2 each have, for example, a Gaussian power distribution in a radial beam cross-section. A beam diameter of each beam is defined as a diameter of a region including a peak of the beam and having an intensity of 1/e² or more of peak intensity. In the present specification, as the beam diameter of a non-circular beam, a length of a region having an intensity of 1/e² or more of peak intensity in a longer axis (e.g., major axis) passing near the center of the beam or in a shorter axis (e.g., minor axis) in a direction perpendicular to the longer axis (major axis) is defined. Furthermore, power of each beam is power in a region including the peak of the beam and having an intensity of 1/e² or more of the peak intensity. Appropriate design or adjustment of the laser device 110, the optical fiber 130, the collimator lens 121, the condenser lens 122, and the DOE 123 makes it possible to form the laser beam L including the main beam B1 and the auxiliary beams B2 as described above.

### [Welding method]

In welding using the laser welding apparatus 100, the workpiece W is set first in an area to which the laser beam L is emitted. Then, the laser beam L and the workpiece W move relative to each other while the laser beam L including the main beam B1 and the auxiliary beam B2 that are obtained by splitting by the DOE 123 is emitted to the workpiece W. Therefore, the laser beam L moves (sweeps) in the sweep direction SD on the surface Wa while being emitted onto the surface Wa. A portion to which the laser beam L is emitted melts and then is solidified as temperature decreases, whereby the workpiece W is welded. Note that In the present embodiment, the sweep direction SD is the X direction in an example, but the sweep direction SD is not limited to the X direction as long as the sweep direction SD intersects the Z direction.

From an experimental study by the inventors, it has been confirmed that the occurrence of a spatter can be suppressed by positioning at least part of the region of the auxiliary beam B2 in front of the main beam B1 in the sweep direction SD, in the laser beam L. It can be assumed that this is because, for example, heating the workpiece W in advance by the auxiliary beam B2 before the main beam B1 arrives further stabilizes a molten pool in the workpiece W formed by the auxiliary beam B2 and the main beam B1.

### [Experimental results]

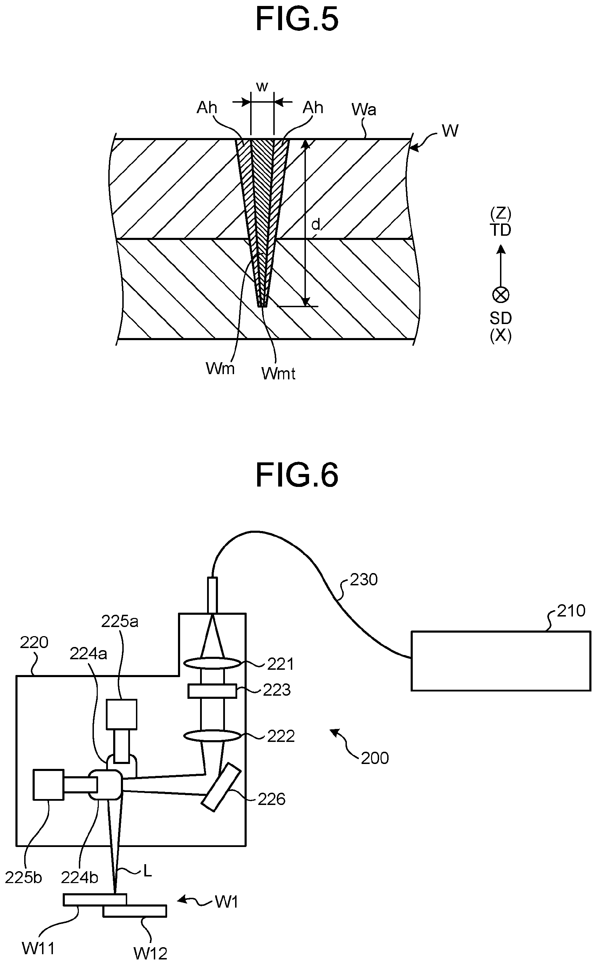

FIG. 5 is a schematic diagram illustrating a cross-section of the workpiece W orthogonal to the sweep direction SD. The inventors focused on an aspect ratio of a weld Wm generated in the cross-section. The aspect ratio (d/w) is defined as a depth d of the weld Wm to a width w orthogonal to the sweep direction SD of the weld Wm. It is assumed that the weld Wm is a region that is so called a weld metal having been melted and solidified (e.g., unidirectional solidification), and does not include a heat-affected zone Ah around the region. Furthermore, the width w is a width in the surface Wa, and the depth d is a depth from the surface Wa to a tip end Wmt of the weld Wm. Note that the width w complies with JIS Handbook 40-1 Welding I (Basic), 4.1.6 Welding design, 11605 "weld width", and the depth d complies with JIS Handbook 40-1 Welding I (Basic), 4.1.6 Welding design, 11619, "fusion penetration". When the aspect ratio (d/w) is small, it is considered that the depth d large enough to the width w may not obtained and the heat-affected zone Ah becomes large, making it difficult to obtain a required weld strength.

For a plurality of conditions shown below in Table 1, the inventors actually emitted the laser beam L having the beam shape of FIG. 3 to the workpiece W by using the laser welding apparatus 100 to perform laser welding, and measured the aspect ratio (d/w) in the weld Wm in the cross-section of the workpiece W.

**Table 1**

| Sweep rate [m/min] | Power ratio | | | | Reference example (without DOE) |
|---|---|---|---|---|---|
| | 3:7 | 5:5 | 7:3 | 9:1 | |
| 30 | 0.5 | 0.8 | 1.0 | 2.1 | 1.3 |
| 20 | 0.6 | 1.1 | 1.2 | 3.6 | 1.2 |
| 10 | 0.9 | 1.6 | 2.2 | 3.9 | 2.4 |
| 5 | 1.1 | 2.0 | 2.6 | 3.6 | 1.9 |
| 2 | 1.7 | 1.9 | 1.8 | 2.3 | 2.2 |
| 1 | 1.8 | 1.5 | 1.6 | 1.8 | 1.8 |
| 0.5 | 1.7 | 1.4 | 1.7 | 1.5 | 1.7 |

In this experiment, for each of ratios of the power of the main beam B1 and a total of power of the auxiliary beams B2 (hereinafter referred to as a power ratio) of 3:7, 5:5 (= 1:1), 7:3, and 9:1, the aspect ratios when a relative moving speed (hereinafter, referred to as sweep rate) between the surface Wa and the laser beam L is 30 m/min, 20 m/min, 10 m/min, 5 m/min, 2 m/min, 1 m/min, and 0.5 m/min were measured.

A wavelength of the laser beam output from the laser device 110 was set to 1070 nm, the power was set to 6 kW, and the sum of the power of the main beam B1 and the power of the plurality of auxiliary beams B2 was set to be the same, for the different power ratios. A radius R (beam radius) of the circumference of the auxiliary beams B2 arranged around the center of the main beam B1 was set to 300 µm.

Furthermore, as the workpiece W, one stainless steel (SUS 304) sheet having a thickness of 10 mm was used. Note that in a case where the workpieces W stacked in a thickness direction TD (Z direction) are in close contact with each other, it can be estimated that the aspect ratio hardly depends on the thickness and the number of the workpieces W. In other words, even when the workpieces W are a plurality of plate materials made of the same material and stacked in close contact with each other in the thickness direction TD, it can be assumed that the same result as in the present experiment using the workpiece W that is one plate material can be obtained.

In Table 1, different rows show different sweep rates, and different columns show different power ratios. A numerical value of each point on the matrix indicates an aspect ratio when the experiment is performed at a sweep rate indicated in a row to which the point belongs and at a power ratio indicated in a column to which the point belongs. Note that each numerical value shown in the right column is a reference example, indicating an aspect ratio at each sweep rate when the DOE 123 is not provided and the laser beam emitted to the workpiece W has a single beam (spot).

The following (1) to (5) were found from the experiment shown in Table 1.
(1) When the power ratio was 5:5, 7:3, or 9:1, the aspect ratio was 0.8 or more, and the weld strength having no practical problem was obtained. When the power ratio was 3:7, some aspect ratios were less than 0.8.
(2) When the power ratio was 5:5, 7:3, or 9:1 in a practical range where the sweep rate was 2 m/min or more and 30 m/min or less, the larger aspect ratio was obtained at each sweep rate than when the power ratio was 3:7. In other words, higher weld strength was obtained.
(3) In each of the power ratio 5:5, the power ratio 7:3, and the power ratio 9:1, the aspect ratio when the sweep rate was within the range of 2 m/min to 20 m/min was larger than the aspect ratio when the sweep rate was 30 m/min. In other words, higher weld strength was obtained.
(4) In each of the power ratio 5:5, the power ratio 7:3, and the power ratio 9:1, the sweep rate at which the aspect ratio had the maximum value, that is, at which the weld strength was the maximum was within the range of sweep rates from 5 m/min to 10 m/min.
(5) Although not shown in Table 1, in the reference example, more spatters were generated than in the power ratio 5:5, 7:3, or 9:1, and no benefit of the laser beam L including the main beam B1 and at least one auxiliary beam B2 was obtained.

Note that in the beam shape of FIG. 3, the laser beam L includes 16 auxiliary beams B2, and the number of auxiliary beams B2 positioned in front of the main beam B1 in the sweep direction SD is one. Therefore, it is mainly the one auxiliary beam B2 to heat a welding position before the main beam B1 reaches the welding position on the surface Wa. In other words, the power ratio 9:1 is equivalent to the power ratio 9:1/16 = 144:1.

From Table 1, the power ratio of the main beam and the total of the one or more auxiliary beams is preferably in the range of 9:1 to 1:1. In this configuration, a high aspect ratio can be suitably achieved.

Furthermore, from Table 1, the sweep rate is preferably 2 m/min or more and 20 m/min or less. In this configuration, the aspect ratio can be set to 1.1 or more.

Furthermore, from Table 1, the sweep rate is more preferably 5 m/min or more and 10 m/min or less. In this configuration, the aspect ratio can be set to 1.6 or more.

It can be considered that this is because the sweep rate that is too fast provides insufficient deep heat input, reducing the depth d and conversely, the sweep rate that is too slow increases heat input to the surface Wa, increasing the width w.

As described above, in the present embodiment, for example, the ratio of the power of the main beam B1 (main power region) and the total of the power of at least one auxiliary beam B2 (auxiliary power region) is set within the range of 144:1 to 1:1.

According to the welding method and welding apparatus configured as described above, it is possible to obtain the required weld strength while suppressing the generation of the spatter.

Furthermore, in the present embodiment, various welding conditions for welding, such as the sweep rate (relative moving speed between the laser beam L and the workpiece W (surface Wa) and the power ratio, are set so as to have, for example, an aspect ratio (d/w) of the weld Wm of 0.8 or more.

According to the welding method and welding apparatus configured as described above, it is possible to obtain the required weld strength while suppressing the generation of the spatter.

Furthermore, in the present embodiment, for example, the sweep rate is 2 m/min or more and 20 m/min or less.

Furthermore, in the present embodiment, for example, the sweep rate is 5 m/min or more and 10 m/min or less.

According to the welding method and welding apparatus configured as described above, it is possible to obtain the higher weld strength while suppressing the generation of the spatter.

### [Second Embodiment]

FIG. 6 is a diagram illustrating a schematic configuration of a laser welding apparatus according to a second embodiment. A laser welding apparatus 200 emits the laser beam L to a workpiece W1 to weld the workpiece W1. The workpiece W1 is configured by overlapping two plate-shaped metal members W11 and W12. The laser welding apparatus 200 has an operation principle similar to that of the laser welding apparatus 100 to achieve welding. Therefore, only the configuration of the laser welding apparatus 200 will be described below.

The laser welding apparatus 200 includes a laser device 210, an optical head 220, and an optical fiber 230.

The laser device 210 includes a laser oscillator, and is configured similarly to the laser device 110, for example, to output a laser beam having a power of several kilowatts. The optical fiber 230 guides the laser beam output from the laser device 210 and inputs the laser beam to the optical head 220.

Similarly to the optical head 120, the optical head 220 is an optical device for emitting the laser beam input from the laser device 210, to the workpiece W1. The optical head 220 includes a collimator lens 221 and a condenser lens 222.

Furthermore, the optical head 220 includes a galvanometer scanner that is arranged between the condenser lens 222 and the workpiece W1. The galvanometer scanner is a device that is configured to control the angles of two mirrors 224a and 224b, move an irradiation position of the laser beam L without moving the optical head 220, and sweep the laser beam L. The laser welding apparatus 200 includes a mirror 226 in order to guide the laser beam L emitted from the condenser lens 222 to the galvanometer scanner. Furthermore, the angles of the mirrors 224a and 224b of the galvanometer scanner are changed by motors 225a and 225b.

The optical head 220 includes a DOE 223, as a beam shaper, that is arranged between the collimator lens 221 and the condenser lens 222. Similarly to the DOE 123, the DOE 223 splits the laser beam input from the collimator lens 221 to generate the main beam and at least one auxiliary beam. At least part of at least one auxiliary beam is positioned in front of the main beam in the sweep direction. In the present embodiment as well, the power ratio can be set as in the first embodiment.

### [Third Embodiment]

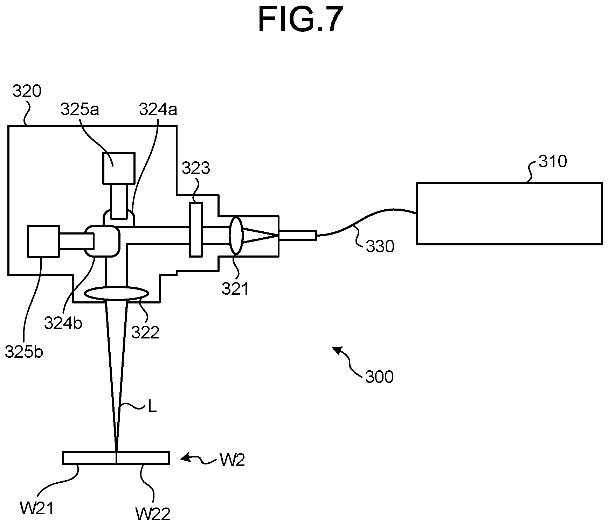

FIG. 7 is a diagram illustrating a schematic configuration of a laser welding apparatus according to a third embodiment. A laser welding apparatus 300 emits the laser beam L to a workpiece W2 to weld the workpiece W2. The workpiece W2 is configured by adjoining two plate-shaped metal members W21 and W22 so as to abut on each other. The laser welding apparatus 300 includes a laser oscillator, and has an operation principle similar to those of the laser welding apparatuses 100 and 200 to achieve welding. Configurations of elements (a laser device 310 and an optical fiber 330) other than an optical head 320 are similar to those of the corresponding elements of the laser welding apparatuses 100 and 200. Therefore, only the configuration of the optical head 320 will be described below.

Similarly to the optical heads 120 and 220, the optical head 320 is an optical device for emitting the laser beam input from the laser device 310, to the workpiece W2. The optical head 320 includes a collimator lens 321 and a condenser lens 322.

Furthermore, the optical head 320 includes a galvanometer scanner that is arranged between the collimator lens 321 and the condenser lens 322. The galvanometer scanner has mirrors 324a and 324b whose angles are changed by motors 325a and 325b. In the optical head 320, the galvanometer scanner is provided at a position different from that in the optical head 220. However, as in the optical head 220, control of the angles of two mirrors 324a and 324b makes it possible to move an irradiation position of the laser beam L without moving the optical head 320, and sweep the laser beam L.

The optical head 320 includes a DOE 323, as a beam shaper, that is arranged between the collimator lens 321 and the condenser lens 322. Similarly to the DOEs 123 and 223, the DOE 323 splits the laser beam input from the collimator lens 321 to generate the main beam and at least one auxiliary beam. At least part of at least one auxiliary beam is positioned in front of the main beam in the sweep direction. In the present embodiment as well, the power ratio can be set as in the first embodiment.

### [Fourth Embodiment]

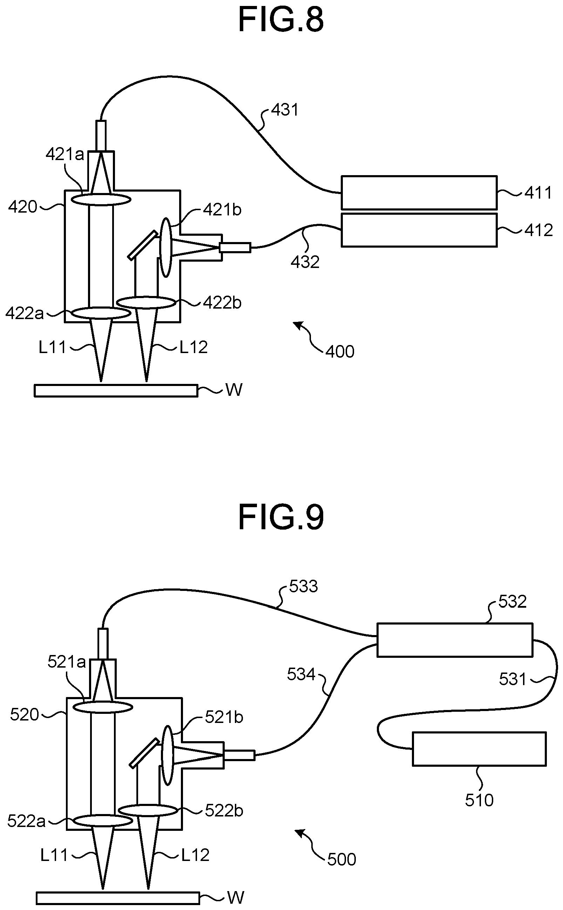

FIG. 8 is a diagram illustrating a schematic configuration of a laser welding apparatus according to a fourth embodiment. A laser welding apparatus 400 emits laser beams L11 and L12 to the workpiece W to weld the workpiece W. The laser welding apparatus 400 has an operation principle similar to that of the laser welding apparatus 100 to achieve welding. Therefore, only the configuration of the laser welding apparatus 400 will be described below.

The laser welding apparatus 400 includes a plurality of laser devices 411 and 412 that output the laser beam, an optical head 420 that emits the laser beam to the workpiece W, optical fibers 431 and 432 that guide the laser beam output from the laser devices 411 and 412 to the optical head 420.

The laser device 411 is configured similarly to the laser device 110, and is configured to, for example, output the laser beam L11 being a single mode or multi-mode laser beam having an output of several kilowatts. The laser device 412 is configured similarly to the laser device 110, and is configured to, for example, output the laser beam L12 having a plurality of multi-mode laser beams or a plurality of single-mode laser beams having an output of several kilowatts.

The optical fibers 431 and 432 guide the laser beams L11 and L12 to the optical head 420. The optical fiber 432 may include a plurality of optical fibers or a multicore fiber to guide the laser beam L12 having the plurality of laser beams.

The optical head 420 is an optical device for emitting the laser beams L11 and L12 guided from the laser devices 411 and 412 to the workpiece W. The optical head 420 includes a collimator lens 421a and a condenser lens 422a that are for the laser beam L11, and a collimator lens 421b and a condenser lens 422b that are for the laser beam L12. The collimator lenses 421a and 421b are optical systems for once collimating the laser beams guided by the optical fibers 431 and 432, and the condenser lenses 422a and 422b are optical systems for collecting the collimated laser beams on the workpiece W. Note that each of the collimator lens 421b and the condenser lens 422b may include a plurality of lenses to collimate or collect the laser beam L12 having the plurality of laser beams.

The optical head 420 emits, of the laser beam L11 and the laser beam L12, the laser beam L11 as the main beam to the workpiece W and emits the laser beam L12 as the auxiliary beam to the workpiece W. In other words, the laser beam emitted to the workpiece W includes the main beam and the plurality of auxiliary beams. Furthermore, in sweeping, at least some of the plurality of auxiliary beams are positioned in front of the main beam in the sweep direction. Then the ratio of the power of the main beam and the total of the power of the plurality of auxiliary beams is 9:1 to 5:5. Thus, the laser welding apparatus 400 can suppress occurrence of a welding defect during welding the workpiece W. Note that the ratio may be set to 144:1 to 5:5 according to arrangement of the auxiliary beams.

According to the laser welding apparatus 400, for example, the arrangement illustrated in FIGS. 3 and 4 can be achieved. Note that in the example illustrated in the drawing, the laser beams L11 and L12 are used, but the number of laser beams may be appropriately increased or reduced.

### [Fifth Embodiment]

FIG. 9 is a diagram illustrating a schematic configuration of a laser welding apparatus according to a fifth embodiment. A laser welding apparatus 500 emits the laser beams L11 and L12 to the workpiece W to weld the workpiece W. The laser welding apparatus 500 has an operation principle similar to that of the laser welding apparatus 100 to achieve welding. Therefore, only the configuration of the laser welding apparatus 500 will be described below.

The laser welding apparatus 500 includes a laser device 510 that outputs a laser beam, an optical head 520 that emits laser beams to the workpiece W, and optical fibers 531, 533, and 534 each of which guides the laser beam output from the laser device 510 to the optical head 520.

The laser device 510 is configured similarly to the laser device 110, and is configured to, for example, output a multi-mode laser beam having an output of several kilowatts. The laser device 510 is used to output both the laser beams L11 and L12 to be emitted to the workpiece W. Therefore, a splitter unit 532 is provided between the optical fibers 531, 533, and 534 each of which guides the laser beam output from the laser device 510 to the optical head 520. The laser device 510 is configured to split the laser beam output from the laser device 510 into a plurality of laser beams and then guide the laser beams to the optical head 520.

The optical fibers 531 and 533 guide the laser beams L11 and L12 to the optical head 520. The optical fiber 533 may include a plurality of optical fibers or a multicore fiber to guide the laser beam L12 having the plurality of laser beams.

The optical head 520 is an optical device for emitting the laser beams L11 and L12 that are obtained by splitting by the splitter unit 532 and that are guided by the optical fibers 531 and 533, to the workpiece W. Therefore, the optical head 520 includes a collimator lens 521a and a condenser lens 522a that are for the laser beam L11, and a collimator lens 521b and a condenser lens 522b that are for the laser beam L12. The collimator lenses 521a and 521b are optical systems for once collimating the laser beams guided by the optical fibers 533 and 534, and the condenser lenses 522a and 522b are optical systems for collecting the collimated laser beams on the workpiece W. Note that each of the collimator lens 521b and the condenser lens 522b may include a plurality of lenses to collimate or collect the laser beam L12 having the plurality of laser beams.

The optical head 520 emits, of the laser beam L11 and the laser beam L12, the laser beam L11 as the main beam to the workpiece W and emits the laser beam L12 as the auxiliary beam to the workpiece W. In other words, the laser beam emitted to the workpiece W includes the main beam and the plurality of auxiliary beams. Furthermore, in sweeping, at least some of the plurality of auxiliary beams are positioned in front of the main beam in the sweep direction. Then the ratio of the power of the main beam and the total of the power of the plurality of auxiliary beams is 9:1 to 5:5. Thus, the laser welding apparatus 500 can suppress occurrence of a welding defect during welding the workpiece W. Note that the ratio may be set to 144:1 to 5:5 according to arrangement of the auxiliary beams.

According to the laser welding apparatus 500, the arrangement illustrated in FIGS. 3 and 4 can be achieved. Note that in the example illustrated in the drawing, the laser beams L11 and L12 are used, but the number of laser beams may be appropriately increased or reduced.

### [Sixth Embodiment]

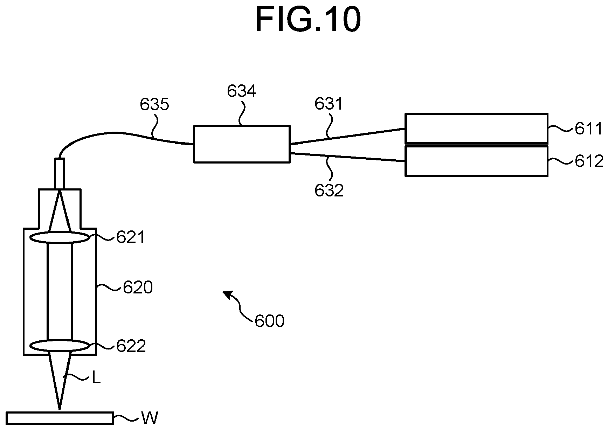

FIG. 10 is a diagram illustrating a schematic configuration of a laser welding apparatus according to a sixth embodiment. A laser welding apparatus 600 emits the laser beam L to the workpiece W to weld the workpiece W. The laser welding apparatus 600 has an operation principle similar to that of the laser welding apparatus 100 to achieve welding. Therefore, only the configuration of the laser welding apparatus 600 will be described below.

The laser welding apparatus 600 includes a plurality of laser devices 611 and 612 that outputs the laser beam, an optical head 620 that emits the laser beam to the workpiece W, and optical fibers 631, 632, and 635 that guide the laser beam output from the laser devices 611 and 612 to the optical head 620.

The laser device 611 is configured similarly to the laser device 110, and is configured to, for example, output a multi-mode laser beam having an output of several kilowatts. The laser device 612 is configured similarly to the laser device 110, and is configured to, for example, output a plurality of multi-mode laser beams or a plurality of single-mode laser beams having an output of several kilowatts.

In the laser welding apparatus 600, the laser beams output from the laser devices 611 and 612 are coupled before being guided to the optical head 620. Therefore, a coupling unit 634 is provided between the optical fibers 631, 632, and 635 that guide the laser beams output from the laser devices 611 and 612 to the optical head 620. The laser beams output from the laser devices 611 and 612 are guided in parallel in the optical fiber 635.

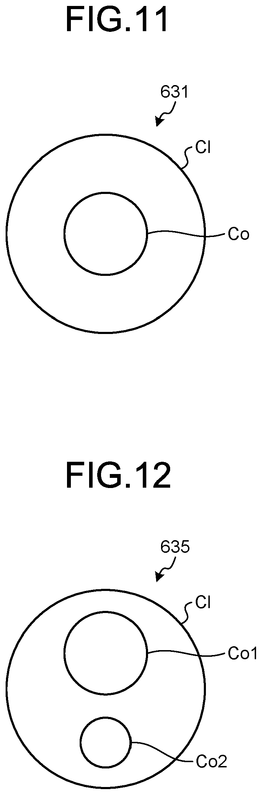

Here, configuration examples of the optical fiber 631 (and the optical fiber 632) and the optical fiber 635 will be described with reference to FIGS. 11 and 12. As illustrated in FIG. 11, the optical fiber 631 (and the optical fiber 632) is a normal optical fiber. In other words, the optical fiber 631 (and the optical fiber 632) is an optical fiber that has one core region Co around which a clad Cl having a refractive index lower than that of the is formed. Meanwhile, as illustrated in FIG. 12, the optical fiber 635 is a multicore fiber. In other words, the optical fiber 635 has two core regions Co1 and Co2, and the clad Cl having a refractive index lower than those of the core regions Co1 and Co2 is formed around the two core regions Co1 and Co2. Furthermore, the core region Co2 includes a plurality of core regions. Then, in the coupling unit 634, the core region Co of the optical fiber 631 and the core region Co1 of the optical fiber 635 are coupled, and the core region Co of the optical fiber 632 and the core region Co2 of the optical fiber 635 are coupled. Each of the plurality of the laser beams output from the laser device 612 is guided by each of the plurality of core regions of the core region Co2.

Referring back to FIG. 10. The optical head 620 is an optical device for emitting laser beam L coupled by the coupling unit 634 to the workpiece W. Therefore, the optical head 620 internally includes a collimator lens 621 and a condenser lens 622.

In the laser welding apparatus 600, the optical head 620 includes no diffractive optical element or no independent optical system for a plurality of laser beams, but the laser beams output from the laser devices 611 and 612 are coupled before being guided to the optical head 620. Therefore, the laser beam L emitted to the workpiece W includes the main beam and the plurality of auxiliary beams. Furthermore, in sweeping, at least some of the plurality of auxiliary beams are positioned in front of the main beam in the sweep direction. Then the ratio of the power of the main beam and the total of the power of the plurality of auxiliary beams is 9:1 to 5:5. Thus, the laser welding apparatus 600 can suppress occurrence of a welding defect during welding the workpiece W. Note that the ratio may be set to 144:1 to 5:5 according to arrangement of the auxiliary beams.

According to the laser welding apparatus 600, the arrangement illustrated in FIGS. 3 and 4 can be achieved. Note that in the example illustrated in the drawing, the laser beams output from the laser devices 611 and 612 are used, but the number of laser beams may be appropriately increased or decreased.

In the above embodiment, the main beam and plurality of auxiliary beams, which are obtained by splitting, do not overlap each other, but the main beam and an auxiliary beam, or the auxiliary beams may overlap each other.

### [Modifications of beam (spot) shape]

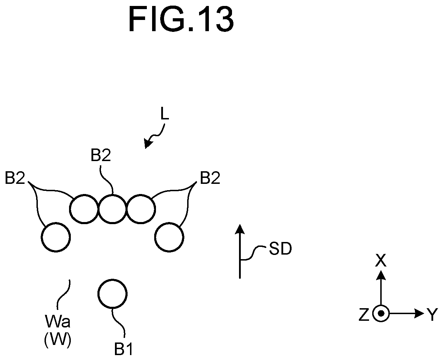

FIG. 13 is a diagram illustrating an example of beams (spots) of the laser beam L, formed on the surface Wa of the workpiece W. In the example of FIG. 13, all of the auxiliary beams B2 are arranged in front of the main beam B1. In addition, the ratio of the power of the main beam B1 and the power of the auxiliary beam B2 is 29: 0.2, and therefore, the ratio of the power of the main beam and the total of the power of the plurality of (five) auxiliary beams is 29:1. According to such arrangement, it is preferable to perform preheating of the workpiece more effectively.

Although the embodiments of the present invention have been exemplified above, the above embodiments are merely examples, and are not intended to limit the scope of the invention. The above embodiments can be implemented in various other forms, and various omissions, substitutions, combinations, and changes may be made without departing from the spirit of the invention. Furthermore, specifications (structure, type, direction, model, size, length, width, thickness, height, quantity, arrangement, position, material, etc.) of each configuration, shape, and the like can be appropriately changed and carried out.

For example, in each of the above embodiments, the welding form of the main beam (main power region) may be keyhole welding or heat conduction welding. Here, the keyhole welding is a welding method using a keyhole. Meanwhile, the heat conduction welding is a welding method to melt a workpiece by using heat generated by absorption of a laser beam on a surface of a workpiece.

In addition, all of the auxiliary beams may have the same power, or the power of one or some of the auxiliary beams may be higher than the power of the other auxiliary beams. In addition, the plurality of auxiliary beams may be classified into a plurality of groups, where auxiliary beams in the same group may have substantially the same power and auxiliary beams may have different power between groups. In this configuration, comparing the auxiliary beams classified into the plurality of different groups, the auxiliary beams have stepwise different power. Note that a certain group may include not a plurality of auxiliary beams but one auxiliary beam.

Furthermore, the material of the workpiece is not limited to the stainless steel.

Furthermore, the workpiece is not limited to the plate material, and the welding form is not limited to lap welding or butt welding. Therefore, the workpiece may be configured by overlapping at least two members to be welded, bringing the at least two members to be welded into contact, or adjoining the at least two members to be welded.

Furthermore, in sweeping the laser beam to the workpiece, a surface area of the molten pool may be adjusted by performing sweeping by known wobbling, weaving, power modulation, or the like.

In addition, the workpiece may have a thin layer of another metal on the surface of the metal, such as a plated metal plate.

### Industrial Applicability

The present invention is applicable to a welding method and a welding apparatus.

### Reference Signs List

100, 200, 300 LASER WELDING APPARATUS (WELDING APPARATUS)
110, 210, 310 LASER DEVICE (LASER OSCILLATOR)
120, 220, 320 OPTICAL HEAD
121, 221, 321 COLLIMATOR LENS
122, 222, 322 CONDENSER LENS
123, 223, 323 DOE (DIFFRACTIVE OPTICAL ELEMENT)
123a DIFFRACTION GRATING
130, 230, 330 OPTICAL FIBER
224a, 224b, 226, 324a, 324b MIRROR
225a, 225b, 325a, 325b MOTOR
400 LASER WELDING APPARATUS
411, 412 LASER DEVICE
420 OPTICAL HEAD
421a, 421b COLLIMATOR LENS
422a, 422b CONDENSER LENS
431, 432 OPTICAL FIBER
500 LASER WELDING APPARATUS
510 LASER DEVICE
520 OPTICAL HEAD
521a, 521b COLLIMATOR LENS
522a, 522b CONDENSER LENS
531, 534 OPTICAL FIBER
532 SPLITTER UNIT
533 OPTICAL FIBER
600 LASER WELDING APPARATUS
611, 612 LASER DEVICE
620 OPTICAL HEAD
621 COLLIMATOR LENS
622 CONDENSER LENS
631, 632, 635 OPTICAL FIBER
634 COUPLING UNIT
A AREA (AHEAD IN SWEEP DIRECTION)
Ah HEAT-AFFECTED ZONE
B1 MAIN BEAM (MAIN POWER REGION)
B1f FRONT END
B2 AUXILIARY BEAM (AUXILIARY POWER REGION)
Cl CLAD
Co, Co1, Co2 CORE REGION
d DEPTH
L, L', L11, L12 LASER BEAM
R RADIUS
SD SWEEP DIRECTION
TD THICKNESS DIRECTION
VL IMAGINARY STRAIGHT LINE
W, W1, W2 WORKPIECE
Wa SURFACE
W11, W12, W21, W22 METAL MEMBER
Wm WELD
Wmt TIP END
w WIDTH
X DIRECTION
Y DIRECTION
Z DIRECTION (NORMAL DIRECTION)

## Claims

1. A welding method comprising:
emitting a laser beam to a workpiece including a metal; and
welding a portion of the workpiece to which the laser beam is emitted by melting,
wherein the laser beam includes a main power region and at least one auxiliary power region,
power in the main power region is equal to or higher than power in each of the at least one auxiliary power region, and
a power ratio of the power in the main power region and a total of the power in the at least one auxiliary power region is within a range of 144:1 to 1:1.

2. The welding method according to claim 1, wherein
an aspect ratio of a depth of a weld to a width orthogonal to a sweep direction of the weld formed in the workpiece by relative movement between the laser beam and the workpiece is 0.8 or more.

3. The welding method according to claim 1 or 2, wherein
the laser beam and the workpiece move relative to each other.

4. The welding method according to claim 3, wherein
a relative moving speed between the laser beam and the workpiece is 2 m/min or more and 30 m/min or less.

5. The welding method according to claim 3, wherein
the relative moving speed is 2 m/min or more and 20 m/min or less.

6. The welding method according to claim 3, wherein
the relative moving speed is 5 m/min or more and 10 m/min or less.

7. A welding apparatus comprising:
a laser oscillator; and
an optical head configured to
receive light oscillated from the laser oscillator to generate a laser beam,
emit the generated laser beam to a workpiece to melt a portion of the workpiece to which the laser beam is emitted, and
perform welding,
wherein the laser beam includes a main power region and at least one auxiliary power region,
power in the main power region is equal to or higher than power in each of the at least one auxiliary power region, and
a power ratio of the power in the main power region and a total of the power in the at least one auxiliary power region is within a range of 144:1 to 1:1.

8. The welding apparatus according to claim 7, wherein
the laser beam and the workpiece move relative to each other.
